(19) **Europäisches Patentamt**
**European Patent Office**
**Office européen des brevets**

(11) **EP 4 043 724 A1**

(12) # EUROPEAN PATENT APPLICATION

(43) Date of publication:
**17.08.2022   Bulletin 2022/33**

(21) Application number: **21382109.3**

(22) Date of filing: **11.02.2021**

(51) International Patent Classification (IPC):
**F03D 15/00** (2016.01)      **F16C 1/00** (2006.01)
**F16D 1/00** (2006.01)

(52) Cooperative Patent Classification (CPC):
**F03D 15/00; F16C 3/02; F16D 1/092;**
F05B 2240/60; F05B 2260/30; F16C 2360/31;
F16D 2001/0903

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **Cerrada, Garate Javier
31006 Pamplona (ES)**

(74) Representative: **Aspacher, Karl-Georg
Siemens Gamesa Renewable Energy GmbH & Co.
KG
Otto-Hahn-Ring 6
81739 München (DE)**

(54)   **WIND TURBINE MAIN SHAFT ASSEMBLY**

(57)      A wind turbine main shaft assembly (10) is provided. The wind turbine main shaft assembly (10) comprises a wind turbine main shaft (20) and a connecting piece (30) attached to an end (22) of the wind turbine main shaft (20). The wind turbine main shaft assembly (10) further comprises a first frictional connection (61) between an axial end face (26) at the end (22) of the wind turbine main shaft (20) and an axial face (36) of the connecting piece (30) and a second frictional connection (62) provided by an interference fit between a circumferential portion at the end (22) of the wind turbine main shaft (20) and a corresponding circumferential portion of the connecting piece (30).

FIG 2

EP 4 043 724 A1

**Description**

FIELD OF THE INVENTION

The present invention relates to a wind turbine main shaft assembly, to a wind turbine comprising such main shaft assembly and to a method of assembling a wind turbine main shaft assembly.

BACKGROUND

In order to make efficient use of the available wind energy and to increase the electrical power output of individual wind turbines, the size of wind turbines has been increasing over the last decades. Modern wind turbines provide an electrical power output in the megawatt range, and wind turbine rotors have increased in size from 50 meters to more than 100 meters in diameter. The rotor blades of a wind turbine rotor are generally attached to a hub, which in turn is mounted to a main shaft of the wind turbine. The wind turbine rotor converts the wind energy into rotational mechanical energy. Accordingly, the main shaft of the wind turbine has to transmit a large torque. At the same time, it has to support the weight of the rotor including the rotor blades and the hub. In particular in configurations in which a floating gearbox is attached to the other end of the main shaft, large bending stresses need to be supported by the main shaft and by the flanges at the end of the main shaft. As wind turbines increase in size, torque, mechanical moments and stresses are increasing correspondingly. The functional capacity of conventional mechanical elements may thus be exceeded, or more complex and expensive mechanical elements may need to be employed.

It is thus desirable to improve the capacity of such main shaft of the wind turbine to transmit torque and to support bending stresses.

SUMMARY

Accordingly, there is a need to mitigate at least some of the drawbacks mentioned above and to provide a main shaft of a wind turbine that has an increased capacity for the transfer of torque.

This need is met by the features of the independent claims. The dependent claims describe embodiments of the invention.

According to an embodiment of the invention, a wind turbine main shaft assembly that comprises a wind turbine main shaft and a connecting piece attached to an end of the wind turbine main shaft is provided. The wind turbine main shaft assembly (abbreviated herein as assembly) comprises a first frictional connection between an axial end face at the end of the wind turbine main shaft and an axial face of the connecting piece. It further comprises a second frictional connection that is provided by an interference fit. The interference fit is formed between a circumferential portion at the end of the wind turbine main shaft and a corresponding circumferential portion of the connecting piece.

Accordingly, by means of such assembly, torque can be transferred via the main shaft and the connecting piece by two frictional connections, thus increasing the capacity for the transfer of torque. A high transmission capacity of torque can thus be achieved. Furthermore, such assembly is relatively insensitive to bending stresses. Since the collecting piece is attached to the end of the main shaft by means of frictional connections, it is mountable and demountable, thus facilitating assembly and de-assembly of the main shaft (also termed primary shaft). Accordingly, such assembly is suitable for large wind turbines which require a high torque transmission capacity.

The circumferential portion at the end of the wind turbine main shaft and the circumferential portion of the connecting piece may correspond in shape and are sized such that an interference fit between these portions is realized. Accordingly, they may have a complementary shape, although the inner component is slightly larger than the outer component to achieve the interference fit. The term "axial" refers to the axis of rotation of the shaft. An axial face may accordingly be a face the surface normal of which has a (main) component along (parallel to) the axis of rotation that is larger than any component of the surface normal perpendicular to the axis of rotation; preferably, the surface normal of the axial face is parallel to the axis of rotation. The axial faces are preferably annular faces. A frictional connection may generally be a connection that is established by pressing the two faces together by applying a force that has a component normal to the faces, e.g. using bolts or an interference fit, so that these faces are held together by friction (static friction or stiction) and are prevented from sliding parallel to each other.

In an embodiment, the main shaft comprises at its end an outer circumferential face providing the circumferential portion of the main shaft. The connecting piece may comprise a protrusion (e.g. annular piece) having an inner circumferential face providing the circumferential portion of the connecting piece. The outer circumferential face of the main shaft and the inner circumferential face of the connecting piece form the interference fit. A reliable frictional connection capable of transmitting high torques can thus be achieved. The end of the main shaft may thus be inserted into the annular protrusion of the connecting piece. It should be clear that it is principally also conceivable to provide the second frictional connection the other way around, e.g. by inserting a smaller protrusion of the connecting piece into the hollow main shaft so as to form an interference fit between an outer surface of the protrusion and an inner surface of the main shaft. The first mentioned configuration is however preferred, as it can transmit larger torques due to a larger contact area.

At least part of the circumferential portion of the main shaft that provides the interference fit may be tapered, and/or at least part of the circumferential portion of the connecting piece providing the interference fit may be tapered. Preferably, corresponding tapered sections are provided in both portions, which facilitates assembly and provides an improved interference fit. It should be clear that both portions may be tapered over the whole area over which the interference fit is formed, or at least over the largest part of the area over which the interference fit is formed.

In an embodiment, the outer circumferential face of the main shaft is at least partly tapered, the tapered portion of the outer circumferential face having an outer circumference that decreases towards the end face of the main shaft. The inner circumferential face of the connecting piece is at least partly tapered at a corresponding axial portion (in particular at the same axial position), the tapered portion of the inner circumferential face having an inner circumference that decreases towards the end face of the main shaft. Accordingly, both portions that form the interference fit have a corresponding shape and, as mentioned above, and may be partly or may be fully tapered. In particular, an outer taper may be provided at the end of the main shaft, which may thus have a conical shape. A corresponding inner taper can be provided inside the hollow protrusion of the connecting piece.

In a particular embodiment, the end of the main shaft is conical, and the connecting piece has a hollow protrusion having a conical inner circumferential face that provides the circumferential portion forming the interference fit. In other embodiments, it may also be conceivable that the end of the main shaft is cylindrical and engages a cylindrical inner surface of such protrusion of the connecting piece.

The hollow protrusion may for example have a cylindrical or conical outer shape. The protrusion may furthermore include a circumferential bulge at an outer circumferential surface thereof, preferably in proximity of the end or at the end of the protrusion that faces away from the inner flange. Such bulge may strengthen the protrusion against deformation in radial direction, thus ensuring a secure interference fit and allowing the remaining part of the protrusion to be provided with a lower wall thickness.

The assembly preferably comprises connecting members that are arranged so as to press together the axial end face of the wind turbine main shaft and the axial face of the connecting piece to provide the first frictional connection. The connecting members may for example comprise or consist of bolts (and respective nuts) and/or screws, yet other connection members such as clamps or the like may also be used.

Preferably, the connecting members extend into the end of the wind turbine main shaft through its axial end face and further extend through the axial face of the connecting piece. Exertion of a high compressive force perpendicular to the mating axial faces can thus be ensured.

The connecting members may for example comprise threaded bolts that are screwed into the end face of the wind turbine main shaft. The bolts extend through an inner flange of the connecting piece on which the axial face is provided. Nuts can then be tightened to the bolts on a side of the inner flange opposite of the axial face, i.e. the nuts are applied to the ends of the bolts that extend through the inner flange. In other configurations, screws may for example be used and may be inserted through the holes in the inner flange and screwed into the end of the main shaft to apply the respective force.

Accordingly, by either tightening the nuts on such bolts or by tightening respective screws, the connecting piece can be pushed onto the end of the main shaft. Thereby, the interference fit between the circumferential portions at the end of the main shaft and on the protrusion of the connecting piece can be established while at the same time, the axial faces on the end of the main shaft and on the connecting piece are pressed together so as to realize the first frictional connection. By means of such connecting members, a fast and efficient mounting of the connecting piece can thus be achieved, which can be realized on site and which can provide the first frictional connection and the second frictional connection simultaneously. Furthermore, by pushing the connecting piece onto the end of the main shaft using the connecting members, it is also not necessary to heat the connecting piece or the main shaft or to cool one of the components in order to achieve the interference fit. Assembly is thus facilitated and made more time and cost efficient.

It is further advantageous to lock the nuts to the bolts, as the loosening of the nuts may thus be prevented. A respective locking mechanism can be provided which preferably comprises a keyway in the respective bolt and a break lip on the respective nut. The break lip is breakable so as to engage the keyway (after the nut has been tightened) to thereby lock the nut in place on the bolt. It should be clear that the locking secures against a loosening of the nut, i.e. the locking direction corresponds to the direction of rotation of the nut which would loosen the nut.

In other embodiments, the interference fit may be achieved not by tightening respective connecting members, but by a hydraulic press or the like.

The connecting piece may be a flange piece that may be configured for attachment to a wind turbine gearbox. As an example, the connecting piece may include or consist of an outer flange for connection to the gearbox, an inner flange for providing the end face and for connection to the end of the main shaft, and a protrusion, in particular a cylindrical or conical hollow protrusion, into which the end of the main shaft can be inserted for providing the interference fit. The inner flange may comprise respective through-holes into which the connecting members, in particular bolts or screws, can be inserted for establishing the connection with the main shaft.

The connecting piece may include one or more, in particular two, three, four or more further holes, that can be arranged radially inside of the inner flange, for extraction of the connecting piece from the end of the main shaft. These may for example be threaded holes that can accommodate respective extractor bolts. Preferably, three such holes offset by an angle of 120° are provided.

The main shaft may have a substantially cylindrical shape. The main shaft is preferably hollow. The main shaft may have at its other end (i.e. the end opposite to the end to which the connecting piece is attached) a flange configured to be connected to a hub of a wind turbine rotor. This flange is preferably integral with the main shaft. The main shaft, including its flange, may in particular be a single piece manufactured by casting and/or forging. It should be clear that the main shaft including its flange can further be machined to achieve the desired size and shape.

The assembly may be configured such that the connecting piece is removable from the wind turbine main shaft. For example, it may be heated to reduce the frictional force of the interference fit and extraction bolts may be used to draw the connecting piece off the main shaft. In particular, the connecting piece and the main shaft are separate components, and they are in particular not welded together.

According to a further embodiment of the present invention, a wind turbine that comprises a wind turbine main shaft assembly in any of the configurations described herein is provided. The wind turbine may further comprise a rotor hub connected to an integral flange on one side of the main shaft, and a gearbox connected to a flange of the connecting piece. The wind turbine may further comprise components that are common to such wind turbine, including the respective rotor blades attached to the hub, a generator coupled to the gearbox and the like.

According to a further embodiment of the invention, a method of assembling a wind turbine main shaft assembly is provided. The method comprises providing a wind turbine main shaft, providing a connecting piece, and attaching the connecting piece to an end of the wind turbine main shaft. The attaching comprises establishing a first frictional connection between an axial end face at the end of the wind turbine main shaft and an axial face of the connecting piece, and establishing a second frictional connection by means of an interference fit between a circumferential portion at the end of the wind turbine main shaft and a corresponding circumferential portion of the connecting piece. By such method, advantages similar to the ones outlined further above may be achieved.

The method may further comprise the providing of connecting members that are configured to press together the axial end face of the wind turbine main shaft and the axial face of the connecting piece, the arranging of the connecting piece at the end of the wind turbine main shaft, and the tightening of said connecting members to thereby press the connecting piece onto the end of the wind turbine main shaft to establish the second frictional connection by the interference fit and to establish the first frictional connection. Accordingly, by tightening the connecting members, e.g. bolts and nuts or screws, both the first frictional connection and the second frictional connection can be established at the same time.

As an example, providing the connecting members may comprise the screwing of bolts into the axial end face of the wind turbine main shaft, wherein the bolts protrude through holes in an inner flange of the connecting piece when the connecting piece is arranged on the end of the wind turbine main shaft. The tightening of the connecting members may comprise the tightening of nuts on said bolts so as to press the inner flange of the connecting piece against the axial end face of the wind turbine main shaft. Further, it is advantageous to engage a locking mechanism that locks the nuts in place on the bolts after tightening the nuts, e.g. by breaking a lip of the nut so as to engage a key on the bolt.

The method may further comprise, prior to attachment of the connecting piece, the mounting of one, two, or more main bearings on the main shaft. The main bearings may for example be mounted to the main shaft using an interference fit. After mounting the one, two or more main bearings, the connecting piece can be attached to the end of the main shaft in any of the ways described herein.

The method may be performed so as to provide an assembly having any of the configurations described herein, and the assembly may comprise any of the configurations described with respect to the method.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1     is a schematic drawing showing a wind turbine including a wind turbine main shaft assembly according to an embodiment of the invention.

Fig. 2     is a schematic drawing showing a wind turbine main shaft assembly according to an embodiment of the invention.

Fig. 3    is a schematic drawing showing an enlarged region of the drawing of figure 2.

Fig. 4    is a schematic drawing illustrating the transfer of torque in the wind turbine main shaft assembly of figure 2.

Fig. 5    is a schematic drawing showing perspective view of the wind turbine main shaft assembly of figure 2.

Fig. 6    is a schematic drawing showing a connecting member including a locking mechanism that may be used with embodiments of the wind turbine main shaft assembly.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

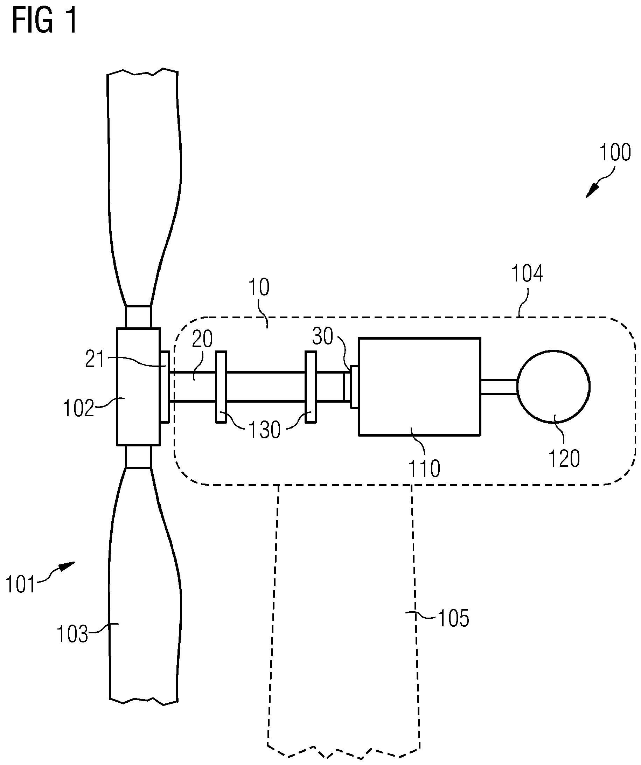

Fig. 1 schematically illustrates a wind turbine 100 that includes a rotor 101 with a rotor hub 102 and rotor blades 103. Wind turbine 100 further includes a nacelle 104 mounted on top of a wind turbine tower 105. The rotor 101 is coupled via a main shaft assembly 10 to a gearbox 110 arranged in nacelle 104. Main shaft assembly 10 includes the main shaft 20 having a flange 21 for attachment to the hub 102 and a connecting piece 30 for attachment to gearbox 110. Assembly 10 transmits torque from the rotor 101 to the gearbox 110. Generator 120 is coupled to gearbox 110 and receives the rotational mechanical energy at the desired rotational speed. In the example of Fig. 1, the main shaft 20 is supported by two main bearings 130. It should be clear that in other configurations, only one main bearing 130 or more main bearings may be provided, and that the main bearings may be arranged differently.

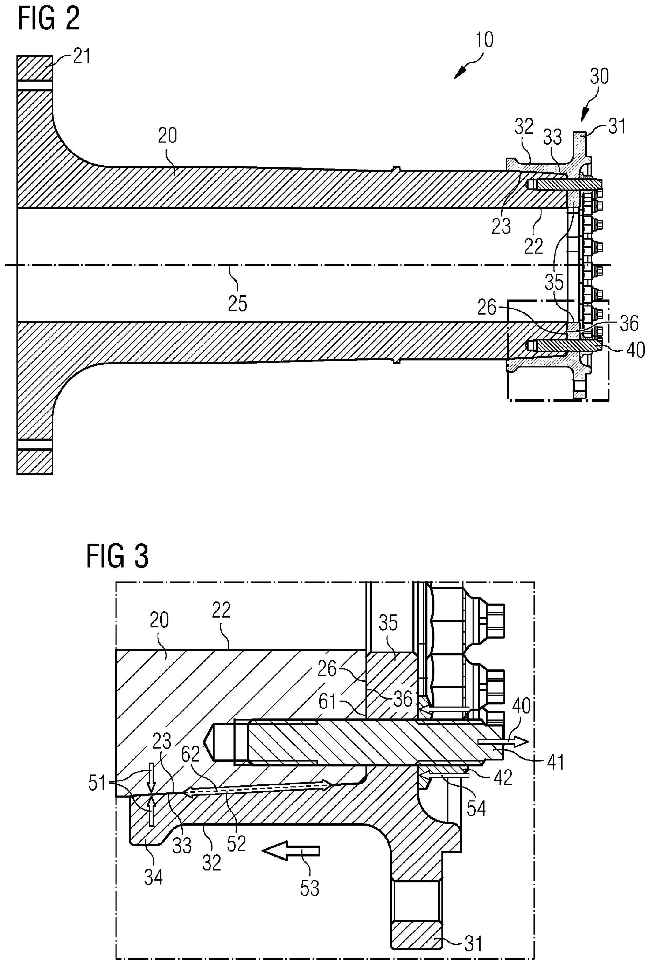

Fig. 2 shows a sectional view of the assembly 10 according to an exemplary embodiment. Main shaft 20 and flange 21 for attachment of the hub 102 are formed integrally, for example by casting, forging and respective machining. The main shaft 20 is rotationally symmetric about the rotational axis 25, which extends in the longitudinal direction of the main shaft. At the other end 22 of the main shaft 20, the connecting piece 30, which is provided in form a flange piece and may simply be termed "flange", is attached. The connecting piece 30 includes, and in particular consists of, an outer flange 31 for attachment to the gearbox, an inner flange 35 for attachment to the end 22 of the main shaft 20 and a protrusion 32 that is provided for establishing an interference fit with the end 22 of the main shaft 20.

The area indicated by a square in Fig. 2 is shown enlarged in Fig. 3. Outer flange 31 includes radially distributed through-holes for attachment to the gearbox. The protrusion 32 has an outer cylindrical shape with a bulge 34 that extends circumferentially and that provides an increased strength and resistance against deformation for the interference fit. The protrusion 32 is hollow and has an inner circumferential surface 33 that provides a conical or tapered shape, wherein the inner circumference is decreasing when moving from the end of the protrusion towards the inner flange 35 in axial direction (axial direction being defined by the rotational axis 25). The end 22 of the main shaft 20 has likewise an outer circumferential surface 23 that is shaped conically or is tapered. The outer circumference of the outer surface 23 decreases when moving in axial direction towards the end face 26 of the main shaft 20. The tapering of the inner surface 33 corresponds to the tapering of the outer surface 23, so that the shapes of these surfaces match. However, the outer circumference of the outer surface 23 (or the radius in cross section of the shaft) is slightly larger than the circumference (or radius) of the inner surface 33, so that an interference fit is established when seating the connecting piece 30 on the end of the main shaft 20. It should be clear that different sizings of the conical "hole" provided by the protrusion 32 and by the main shaft with its conical end 22 are conceivable to establish interference fits of different strength, such as a driving fit or a forced fit or the like. The strength of the desired frictional connection and thus the amount of interference will generally be determined based on the torque that is to be transferred by the respective frictional connection.

In Fig. 3, arrows 51 indicate the compressive force that is applied between the surfaces 23 and 33 due to the interference fit, i.e. the force/pressure that the protrusion 32 applies to face 23 by the interreference fit, and the corresponding reactive force/pressure applied by the end of the main shaft to face 33. Arrow 52 indicates the friction that results from these forces.

It should be clear that the interference fit does not need to be established over the whole length of the protrusion 32, but may be established only in one or more portions thereof, and in one or more corresponding portions of the end of the main shaft 20. Further, it should be clear that different shapes of the inner surface 33 and the outer surface 23 are conceivable, such as a cylindrical shape of both surfaces, or an only partially tapered or conical shape.

Besides the frictional connection 62 established by the interference fit, a further frictional connection 61 is established between an end face 26 of the main shaft 20 and an axial face 36 provided on the inner flange 35 of connecting piece 30. By using connecting members 40, the inner flange 35 is pressed onto the end face 26 of end 22 of main shaft 20. The resulting forces in normal direction of faces 26, 36 cause friction (in particular stiction) between the end of the main shaft and the connecting piece 30 parallel to the faces 26, 36 and thus establish a further frictional connection 61. The strength of the frictional connection 61 depends on the amount of force exerted perpendicular to the faces 26, 36 by connecting members 40.

In the illustrated example of Fig. 3, connecting member 40 includes a bolt 41 that is screwed and tightened into a hole provided in the end 22 of main shaft 20. The bolt 41 extends through holes in the inner flange 35, and a nut 42 is tightened to the end of bolt 41. To establish the interference fit, the connecting piece 30 needs to be forced onto the end 22 of main shaft 20 in the direction indicated by arrow 53. Assembly can thus occur by placing the connecting piece 30 onto the end of main shaft 22 and tightening the connecting members 40 (e.g. nuts 42) to thereby force the connecting piece 30 onto the end 22. Thereby, the first frictional connection 61 is established due to the compressive force applied by the connecting members 40 and indicated by arrows 54. At the same time, the second frictional connection is established since the displacement of connecting piece 30 along arrow 53 causes the establishing of the interference fit. The compressive forces 51 are thereby put into action, thus resulting in the second frictional connection.

Besides such method of establishing the interference fit, it should be clear that other methods are conceivable, such as using a press to force the connecting piece 30 onto the end of the shaft 20.

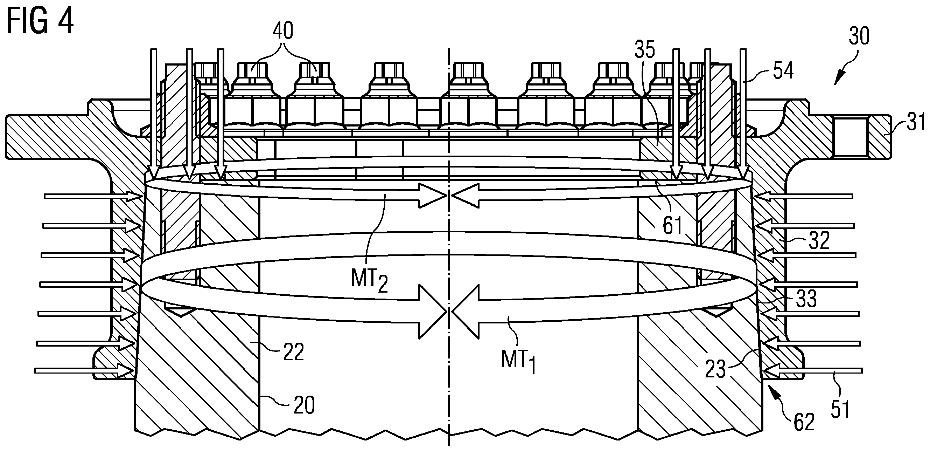

Fig. 4 illustrates in more detail the compressive forces 51 applied by the interference fit to the outer surface 23 of main shaft 20. The respective frictional connection 62 is capable of transmitting a torque $MT_1$, that is proportional to the compressive force 51 (FA) normal to the respective surface and a friction coefficient. The compressive force 54 established by the tightening of the connecting members 40 and exerted on the end face 26 of the main shaft results in the frictional connection 61, that is capable of transmitting a torque $MT_2$. The torque $MT_2$ is again proportional to the compressive force 54 (FB) normal to the end face 26 and to a respective frictional coefficient.

The total torque that the coupling between the main shaft and connecting piece 30 is capable to transmit is accordingly composed of a portion through the conical end 22 and another portion through the end face of the shaft, the overall torque being

$$MT = MT_1 + MT_2.$$

The desired torque to be transmitted can be assigned to each of the respective frictional connections 62, 61 as desired, for example by using a partition coefficient Kr:

$$MT_1 = Kr \times MT;$$

$$MT_2 = (1-Kr) \times MT.$$

Based on the torque $MT_1$ to be transmitted and the geometry of the conical end, the required pressure "p" on the tapered surface 23 can be deduced, and thus the necessary force that needs to be exerted by the connecting members for establishing the interference fit (preload). This preload defines the type and quantity $n_1$ of the connecting members necessary for establishing the respective second frictional connection, and they may be either screws or bolts. The pressure should of course be adequate so as to prevent a permanent deformation of the connecting piece, in particular its protrusion 32, or of the end of the shaft. The geometry of the conical section may for example be dimensioned based on DIN 7190-2 taking into account the friction coefficients. Furthermore, the possibility may be taken into account that at some time, it may be desirable to dismount the connecting piece 30 from the end of the main shaft 20, for example by using screw-type extractors.

Based on the torque $MT_2$ to be transmitted by the first frictional connection 61 established at the end face 26 of the main shaft and the respective coefficient of friction in the front area, the number $n_2$ and type of connecting elements, in particular screws or bolts, required to establish the desired compressive force can be deduced. The numbers $n_1$ and $n_2$ and the type of the connecting elements may be the same or may be different, as appropriate. The higher number of $n_1$ and $n_2$ is used so that the requirements for both connections to be established can be met.

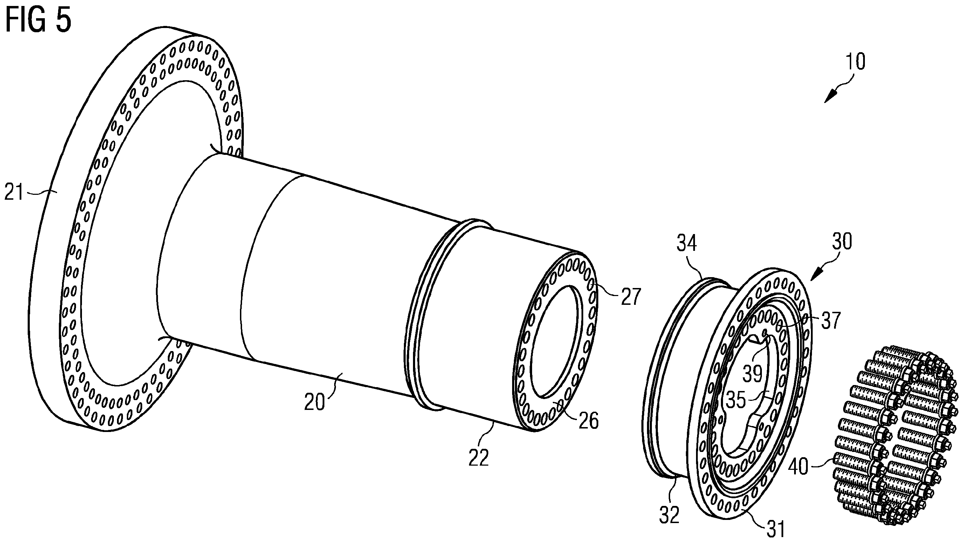

Fig. 5 shows a perspective view of the assembly 10 of Fig. 2, showing the main shaft 20 with its flange 21 for connection to the rotor hub and its opposite end 22. The axial end face 26 and the holes 27 extending therethrough into the end 22 are visible. On the connecting piece 30, the outer circumferential flange 31 with respective through-holes for attachment to the gearbox and the inner flange 35 with through-holes 37 are visible. Connecting members 40 extend through the holes 37 into holes 27 when assembled. On the inner flange, three threaded holes 39 are provided for receiving extractor bolts that can be used to dismount the connecting piece 30 from end 22 of main shaft 20. Main shaft 20 is generally hollow.

Prior to mounting the connecting piece 30, one or more main bearings may be mounted to the main shaft 20, as shown in Fig. 1. For disassembly, the connecting piece 30, in particular its protrusion 32, may be heated in order to facilitate the disengagement of the interference fit.

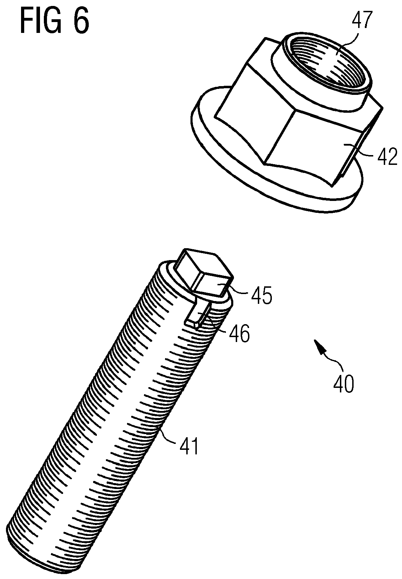

Fig. 6 illustrates a possible implementation of the connecting members 40. Connecting member 40 includes a bolt 41 and a nut 42. The bolt is at least partially threaded (indicated in Fig. 6), so that it can be screwed into threaded holes 27 provided in end 22 of main shaft 20, and so that it can receive nut 42. The threaded portions are shown as recessed areas in Fig. 3. After the bolt has been tightened into hole 27, for example using a square or hex head 45 provided on top of the bolt, nut 42 is tightened to apply the compressive force 54. Preferably, the connecting member 40 includes a locking mechanism that keeps connecting member 40 in place once it is tightened. In the example of Fig. 6, the locking mechanism includes a keyway 46 in bolt 41 and a breaking lip 47 on nut 42. Once tightened, the breaking lip 47 at the position of keyway 46 is broken such that a part of the lip engages keyway 46 to thereby lock the nut 42 in place. This may be done by a chisel or other tool.

The connecting piece 30 may in particular consist of the outer flange, the inner flange and the protrusion, which may extend in axial direction from a position between the outer and inner flanges. Protrusion 42 may have a cylindrical shape with a circumferential bulge and an inner conical circumferential surface.

By means of the embodiments described herein, large torques can be transmitted via the connecting piece coupled to a drive shaft, which has particular advantages in coupling the main shaft to the gearbox of the wind turbine. The torque is essentially transmitted completely by the friction generated at the first and second connections between the connecting piece and the main shaft. The friction is in particular generated at the end face of the main shaft and in the outer conical area at the end of the main shaft, which is cylindrical in classical main shafts. The coupling mechanism is thus relatively simple and simple mechanical theory can be used to calculate the transmitted torques. Once the total torque to be transmitted has been determined, the configuration can be adjusted as desired. Further, it provides an ease of assembly and does not need maintenance. The costs of the coupling are also reduced. In particular, removability of the connecting piece allows the replacing of the bearings, which is a significant advantage over conventional solutions that provide a fixed and not removable attachment.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A wind turbine main shaft assembly (10) comprising:

   - a wind turbine main shaft (20); and
   - a connecting piece (30) attached to an end (22) of the wind turbine main shaft (20);

   **characterized in that** the assembly (10) comprises

   - a first frictional connection (61) between an axial end face (26) at the end (22) of the wind turbine main shaft (20) and an axial face (36) of the connecting piece (30); and
   - a second frictional connection (62) provided by an interference fit between a circumferential portion at the end (22) of the wind turbine main shaft (20) and a corresponding circumferential portion of the connecting piece (30).

2. The wind turbine main shaft assembly according to claim 1, wherein the main shaft (20) comprises at its end (22) an outer circumferential face (23) providing said circumferential portion of the main shaft (20), and wherein the connecting piece (30) comprises a protrusion (32) having an inner circumferential face (33) providing said circumferential portion of the connecting piece (30), the outer circumferential face (23) of the main shaft (20) and the inner circumferential face (33) of the connecting piece (30) forming said interference fit.

3. The wind turbine main shaft assembly according to claim 1 or 2, wherein at least part of said circumferential portion of the main shaft (20) providing the interference fit is tapered, and/or wherein at least part of said circumferential portion of the connecting piece (30) providing the interference fit is tapered.

4. The wind turbine main shaft assembly according to claims 2 and 3, wherein the outer circumferential face (23) of the main shaft (20) is at least partly tapered, the tapered portion of the outer circumferential face (23) having an outer circumference that decreases towards said end face (26) of the main shaft (20), and wherein the inner circumferential face (33) of the connecting piece (30) is at least partly tapered at a corresponding axial portion, the tapered portion of the inner circumferential face (33) having an inner circumference that decreases towards said end face (26) of the main shaft (20).

5. The wind turbine main shaft assembly according to any of the preceding claims, wherein the end (22) of the main shaft (20) is conical, and wherein the connecting piece (30) has a cylindrical hollow protrusion (32) having a conical inner circumferential face (33) that provides said circumferential portion.

6. The wind turbine main shaft assembly according to any of the preceding claims, further comprising connecting members (40) arranged so as to press together the axial end face (26) of the wind turbine main shaft (20) and the axial face (36) of the connecting piece (30) to provide said first frictional connection (61).

7. The wind turbine main shaft assembly according to claim 6, wherein the connecting members (40) comprise bolts (41, 42) and/or screws.

8. The wind turbine main shaft assembly according to claim 6 or 7, wherein the connecting members (40) extend into the end (22) of the wind turbine main shaft (20) through its axial end face (26), and further extend through the axial face (36) of the connecting piece (30).

9. The wind turbine main shaft assembly according to claim 7 and 8, wherein the connecting members (40) comprise threaded bolts (41) that are screwed into the end face (26) of the wind turbine main shaft (20), the bolts (41) extending through an inner flange (35) of the connecting piece (30) on which said axial face (36) is provided, wherein nuts (42) are tightened to the bolts (41) on a side of the inner flange (35) opposite of said axial face (36).

10. The wind turbine main shaft assembly according to claim 9, wherein said nuts (42) are locked to said bolts (41) using a locking mechanism, wherein the locking mechanism preferably comprises a keyway (46) in the respective bolt (41) and a break lip (47) on the respective nut (42), the break lip (47) being breakable so as to engage the keyway (46) to thereby lock the nut (42) in place on the bolt (41).

11. The wind turbine main shaft assembly according to any of the preceding claims, wherein the connecting piece (30) is a flange piece, wherein the flange piece is preferably configured for attachment to a wind turbine gear box (110).

12. A wind turbine, comprising a wind turbine main shaft assembly (10) according to any one of the preceding claims.

13. A method of assembling a wind turbine main shaft assembly, the method comprising:

    - providing a wind turbine main shaft (20);
    - providing a connecting piece (30); and
    - attaching the connecting piece (30) to an end (22) of the wind turbine main shaft (20),

    **characterized in that** said attaching comprises:

    - establishing a first frictional connection (61) between an axial end face (26) at the end (22) of the wind turbine main shaft (20) and an axial face (36) of the connecting piece (30); and
    - establishing a second frictional connection (62) by means of an interference fit between a circumferential portion at the end (22) of the wind turbine main shaft (20) and a corresponding circumferential portion of the connecting piece (30).

14. The method according to claim 13, wherein said attaching further comprises:

    - providing connecting members (40) that are configured to press together the axial end face (26) of the wind turbine main shaft (20) and the axial face (36) of the connecting piece (30);
    - arranging said connecting piece (30) at the end (22) of the wind turbine main shaft (20); and
    - tightening said connecting members (40) to thereby press the connecting piece (30) onto the end (22) of the wind turbine main shaft (20) to establish the second frictional connection (62) by the interference fit and to establish the first frictional connection (61).

15. The method according to claim 14, wherein providing the connecting members (40) comprises the screwing of bolts (41) into the axial end face (26) of the wind turbine main shaft (20), wherein the bolts (41) protrude through holes in an inner flange (35) of the connecting piece (30) when the connecting piece (30) is arranged on the end (22) of the wind turbine main shaft (30), and wherein the tightening of the connecting members (40) comprises the tightening of nuts (42) on said bolts (41) so as to press the inner flange (35) of the connecting piece (30) against the axial end face (26) of the wind turbine main shaft (20).

FIG 1

FIG 2

FIG 3

FIG 4

FIG 5

FIG 6

Europäisches
Patentamt

European
Patent Office

Office européen
des brevets

# EUROPEAN SEARCH REPORT

Application Number

EP 21 38 2109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 513 086 A1 (VESTAS WIND SYS AS [DK]) 24 July 2019 (2019-07-24) | 1,2,6-13 | INV.<br>F03D15/00 |
| Y | * paragraphs [0001], [0017], [0038], [0040], [0045] *<br>* figures 2,3,5 * | 3-5,14, 15 | F16C1/00<br>F16D1/00 |
| | ----- | | |
| Y | EP 2 383 468 A1 (GEN ELECTRIC [US]) 2 November 2011 (2011-11-02)<br>* paragraphs [0001], [0002], [0023], [0034] - [0038], [0040], [0042] *<br>* figure 10 * | 3-5,14, 15 | |
| | ----- | | |
| A | EP 2 565 478 A1 (SIEMENS AG [DE]) 6 March 2013 (2013-03-06)<br>* paragraphs [0015], [0016], [0018] *<br>* figure 1 * | 1,2, 11-13 | |
| | ----- | | |
| A | EP 2 242 925 A2 (VESTAS WIND SYS AS [DK]) 27 October 2010 (2010-10-27)<br>* paragraphs [0001], [0049] *<br>* figures 2,3 * | 1,6,7, 10,12,13 | |
| | ----- | | |

TECHNICAL FIELDS
SEARCHED (IPC)

F03D
F16C
F16D

The present search report has been drawn up for all claims

| Place of search | Date of completion of the search | Examiner |
|---|---|---|
| The Hague | 21 June 2021 | Pasquet, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     .............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 2109

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | | Publication date | Patent family member(s) | | Publication date |
|---|---|---|---|---|---|
| EP 3513086 | A1 | 24-07-2019 | EP | 3513086 A1 | 24-07-2019 |
| | | | ES | 2812707 T3 | 18-03-2021 |
| | | | US | 2019203774 A1 | 04-07-2019 |
| | | | WO | 2018050184 A1 | 22-03-2018 |
| EP 2383468 | A1 | 02-11-2011 | CN | 102235323 A | 09-11-2011 |
| | | | EP | 2383468 A1 | 02-11-2011 |
| | | | US | 2011269557 A1 | 03-11-2011 |
| EP 2565478 | A1 | 06-03-2013 | CN | 203023323 U | 26-06-2013 |
| | | | EP | 2565478 A1 | 06-03-2013 |
| EP 2242925 | A2 | 27-10-2010 | CN | 101903651 A | 01-12-2010 |
| | | | EP | 2242925 A2 | 27-10-2010 |
| | | | ES | 2554538 T3 | 21-12-2015 |
| | | | US | 2011142598 A1 | 16-06-2011 |
| | | | WO | 2009080712 A2 | 02-07-2009 |

EPO FORM P0459

For more details about this annex : see Official Journal of the European Patent Office, No. 12/82